# EUROPEAN PATENT SPECIFICATION

(11) **EP 0 643 915 B1**
(45) Date of publication and mention of the grant of the patent: **11.12.1996**
(21) Application number: 93114125.3
(22) Date of filing: 03.09.1993
(51) Int. Cl.: A21C 9/04, A23L 1/16

(54) **Layering machine**
Laminiermaschine
Machine pour la production d'un produit en feuilles

(43) Date of publication of application: 22.03.1995
(73) Proprietor: FRISCO-FINDUS AG, CH-9400 Rorschach (CH)
(72) Inventor: Askman, Lars, S-260 50 Billesholm (SE); Ganrot, Anders Bertil, S-267 00 Bjuv (SE); Leonhardt, Werner, S-265 31 Astorp (SE)
(74) Representative: Pate, Frederick George

(56) References cited:
- FR-A- 2 512 645
- US-A- 3 670 665
- US-A- 4 569 849

## Description

The present invention relates to a machine and method for the continuous layering of strips of food material, more particularly for the continuous production of lasagne by forming strips of pasta in layers, inserting a filling between the layers and cutting into portions automatically.

Normally, in the production of lasagne, the pasta is extruded, cut into strips of a suitable width, blanched, cut, and placed piece by piece into a tray by hand with a filling of sauce between the pieces. This process has the following disadvantages:
1) The pasta processing line is unduly long and occupies a great deal of space.
2) The process is labour intensive and requires at least five people on the line.
3) The pasta is extremely slippery and difficult to handle.
4) There are losses of pasta as a result of a lack of time for the operator to transport all the pieces of pasta to the tray.
5) There are several moving parts in the machine for transporting and layering the pasta strips, which are prone to break down or wear out.

A cake layering machine is known from US patent 3.670.655.

US patent 4.569.849 describes a method for making lasagna.

We have developed a machine and method for the continuous layering of strips of food material which occupies less than than half the length of a conventional machine, is labour saving, has no moving parts except for the basic conveyor which reduces or eliminates the costs for exchange of machine parts or possible shut-downs, and substantially prevents any losses in pasta.

According to the present invention there is provided a machne for layering stripes of food material comprising
a) means for forming a plurality of parallel strips of flexible food material,
b) one lower conveyor belt (17) and at least one upper conveyor belt (14,15,16) extending from its upstream end lateral to the lower conveyor belt (17) to its downstream end overlying the lower conveyor belt (17),
c) guiding means for guiding one stripe of flexible food material to the upstream end of the lower conveyor belt (17) and at least one other strip of flexible food material to the upstream end of an upper conveyor belt (14,15,16),
d) power means adapted to advance the conveyor belts (14,15,16,17) and the strips downstream, and
e) guiding means training a strip of flexible food material from the downstream end of an upper conveyor belt (14,15,16) to lie above another strip advancing downstream thereby forming a food product comprising layered stripes of the food material,
characterised in that the strips of the flexible food material are added one after the other onto the strip or strips on the lower conveyor belt (17) from a plurality of upper conveyors the downstream ends of which are disposed along the lower conveyor, the upper conveyor with the downstream end at the uppermost upstream end of the lower conveyor belt is arranged such as to deposit a stripe onto the stripe lying on the lower conveyor belt, the upper conveyor which has its downstream end further downstream of the lower conveyor is arranged such as to deposit a stripe onto the stripe which has just been deposited, and the upper conveyor which has its downstream end at the lower most upstream end of the lower conveyor is arranged such as to deposit the stripe which forms the top stripe of the food product.

The strips of flexible food material may be, for instance, strips of pasta which may be formed by any conventional means, e.g. where the pasta dough is extruded from a kneader/sheeter to give a strand which is passed onto a conveyor belt which transports the strand through a blanching tank containing hot water and then out of the blanching tank onto a conveyor.

Advantageously, the blanched, pasta strand is transported on the conveyor belt, which may conveniently be a cooling conveyor belt, above which is positioned one or more cutting devices, e.g. rotating circular knives, adapted to cut the pasta strand longitudinally into a plurality of strips lying side by side. The usual number of strips is from three to six for a lasagne but a larger number of sheets may be used for some products, e.g. up to 11.

The number of upper conveyor belts is conveniently the same as the number of strips which it is intended to form in layers over the strip lying on the lower conveyor, i.e. one less than the total number of strips forming the layers of the food product. When there are a plurality of upper conveyors, they are advantageously positioned parallel to one another and have different lengths, the shortest one depositing a strip onto the strip lying on the lower conveyor belt, the next shortest depositing a strip onto the strip which has been deposited from the shortest upper conveyor belt,and so on, until the longest upper conveyor belt deposits the strip which forms the top layer of the food product.

The guiding means to guide the strips of flexible food material onto the upstream ends of the lower and upper conveyor belts respectively may conveniently be rollers around which the strips are trained.

The power means adapted to advance the conveyor belts and the strips downstream may any conventional means, e.g. an electric motor. Although one motor may be used to drive all the belts, it is preferable that separate motors are used to drive the cooling conveyor, the upper conveyor and the lower conveyor belts because it is desirable that the speed of each conveyor is individually adjustable. Although the conveyors travel at approximately the same speed there is normally a slight speed increase from the cooling conveyor to the upper conveyor and from the upper conveyor to the lower conveyor.

The guiding means to guide a strip of flexible food material from the downstream end of an upper conveyor belt to lie above another strip advancing downstream may suitably be a roller around which the strip is trained.

Advantageously, means are provided for depositing a filling between the layers of the food product. Such means may be provided by a filling nozzle positioned upstream of the guiding means for guiding a strip from the downstream end of an upper conveyor belt to lie above another sheet advancing downstream. For a product having more than one two layers of strips with a filling between each layer, there are conveniently a plurality of filling nozzles arranged successively the number of nozzles corresponding to the number of layers of filling. The guiding means to guide a strip of flexible food material from the downstream end of an upper conveyor belt to lie above another strip advancing downstream may suitably be a calibrating roller around which the strip is trained and which can be adjusted to control the thickness of the filling.

The filling may be, for instance, a sauce or other conventional filling for a lasagne, e.g.using a meat, fish, vegetable or meat base.

Preferably a cutting means is provided for cutting the food product transversely to its direction of travel and is advantageously situated above the lower conveyor downstream of the position where the top layer has been deposited onto the food product.

The present invention also provides a process for layering strips of food material as set out in the independent method claim.

The present invention may be fully automated and controlled by a computer.

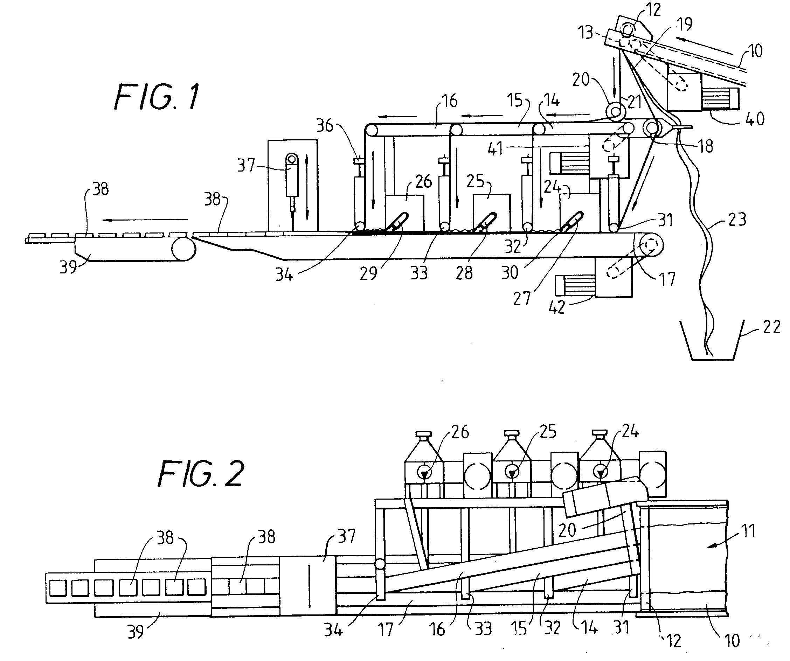

The present invention will now be further illustrated by way of example with reference to the accompanying drawings in which
Figure 1 is a diagrammatic side view of a lasagne producing machine according to the present invention,
Figure 2 is a top plan view of the machine shown in Figure 1,

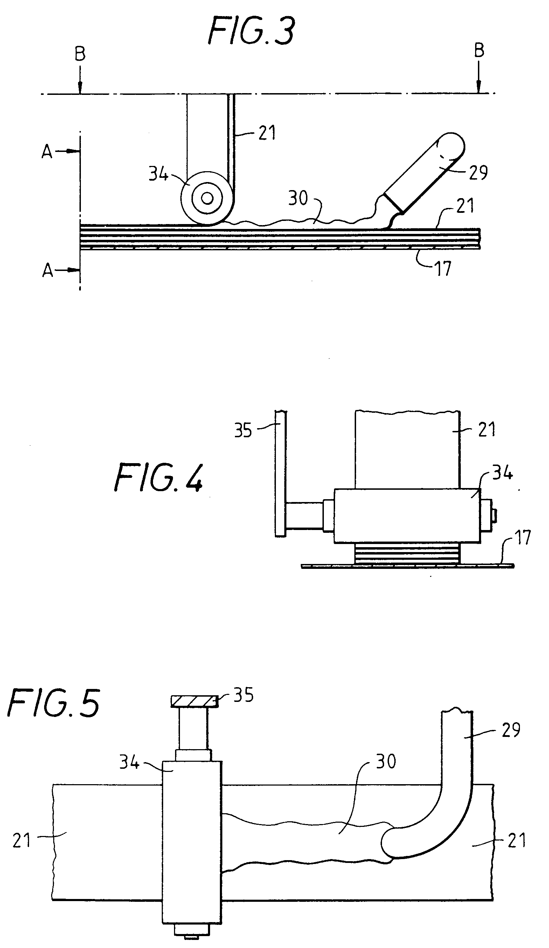

Figure 3 is a side view of a guiding roller for a pasta strip and a filling nozzle,
Figure 4 is a section along the line A-A of Figure 3 looking in the direction of the arrows, and
Figure 5 is a section along the line B-B of Figure 3 looking in the direction of the arrows.

Referring to the drawings, the machine comprises a cooling conveyor 10 transporting a pasta strand 11. At the downstream end of the conveyor 10 are five rotary cutting knives 12 and a guide roller 13. Below the guide roller 13 are three upper cross conveyors 14, 15 and 16, and a lower conveyor 17. A guide roller 18 is provided for guiding pasta strip 19 onto the lower conveyor 17 and three guide rollers 20 (one for each upper cross conveyor 14, 15 and 16) supported on a single shaft are provided for guiding pasta strips 21 onto the upper cross conveyors 14, 15 and 16. A waste bin 22 is provided for receiving scrap pasta cuttings 23. Filling pumps 24, 25 and 26 provided with filling nozzles 27, 28 and 29 respectively supply a sauce 30. Above the lower conveyor are provided calibrating guide rollers 31, 32, 33 and 34 each mounted on a support 35 vertically adjustable by means of a knob 36. Downstream of the calibrating rollers is a guillotine cutter 37 for cutting the layered pasta strip into lasagnes 38 followed by an acceleration conveyor belt 39. Three electric motors 40, 41 and 42 are provided to drive the cooling conveyor 10, the upper conveyor (comprising cross conveyors 14, 15 and 16), and the lower conveyor 17 respectively.

In operation, a blanched pasta strand 11 is transported on a cooling conveyor 10 beneath the rotary cutting knives 12 which cut the strand into four parallel strips one of which 19 is trained around and guided by the guiding roller 18 to the lower conveyor 17 where it is trained around the calibrating roller 31 at its upstream end and the other three strips 21 are trained around and guided by the guiding roller 20 to the upstream ends of the upper cross conveyors 14, 15 and 16 respectively. The upper and lower conveyors are driven in synchronisation with the cooling conveyor by a motor (not shown) and a portion of sauce 30 is fed from the nozzle 27 onto the upper surface of the pasta strip 19 travelling downstream on the lower conveyor 17. When the pasta strip 19 with the sauce on top is conveyed to a position below the downstream end of the upper cross conveyor 14, one of the pasta strips 21 travelling downstream on the upper cross conveyor 14 is transported off the downstream end and is trained around the calibrating roller 32 so that it comes to lie upon the layer of sauce which has been fed onto the strip 19 to give a two-layered pasta strip. The calibrating roller 32 adjusts the thickness of the layers with the sauce filling between. A portion of sauce 30 is then fed from nozzle 28 onto the upper surface of the two-layered pasta strip and when the two-layered pasta strip is conveyed to a position beneath the downstream end of the upper cross conveyor 15, another of the pasta strips 21 travelling on the upper conveyor 15 is transported off the downstream end and is trained around the calibrating roller 33 so that it comes to lie upon the layer of sauce which has been fed onto the the upper surface of the two-layered pasta strip to give a three-layered pasta strip. The calibrating roller 33 adjusts the thickness of the layers with the sauce filling between. A portion of sauce 30 is then fed from nozzle 29 onto the upper surface of the three-layered pasta strip and when the three-layered pasta strip is conveyed to a position beneath the downstream end of the upper cross conveyor 16, another of the pasta strips 21 travelling on the upper conveyor 16 is transported off the downstream end and is trained around the calibrating roller 34 so that it comes to lie upon the layer of sauce which has been fed onto the the upper surface of the three-layered pasta strip to give a four-layered pasta strip. The calibrating roller 34 adjusts the thickness of the layers with the sauce filling between and the four-layered pasta strip is then transported downstream so that it passes beneneath the guillotine cutter 37 which reciprocates and cuts the four-layered pasta strip transversely into individual lasagnes 38 which are then transferred to an acceleration belt 39 which spaces them from one another for further processing.

The whole process may be synchronised and electronically controlled by a computer.

## Claims

1. A machine for layering strips of food material comprising
a) means for forming a plurality of parallel strips of flexible food material,
b) one lower conveyor belt (17) and at least one upper conveyor belt (14,15,16) extending from its upstream end lateral to the lower conveyor belt (17) to its downstream end overlying the lower conveyor belt (17),
c) guiding means for guiding one strip of flexible food material to the upstream end of the lower conveyor belt (17) and at least one other strip of flexible food material to the upstream end of an upper conveyor belt (14,15,16),
d) power means adapted to advance the conveyor belts (14,15,16,17) and the strips downstream, and
e) guiding means training a strip of flexible food material from the downstream end of an upper conveyor belt (14,15,16) to lie above another stripe advancing downstream thereby forming a food product comprising layered stripes of the food material,
characterised in that the strips of the flexible food material are added one after the other onto the strip or strips on the lower conveyor belt (17) from a plurality of upper conveyors the downstream ends of which are disposed along the lower conveyor,
the upper conveyor with the downstream end at the uppermost upstream end of the lower conveyor belt is arranged such as to deposit a strip onto the strip lying on the lower conveyor belt,
the upper conveyor which has its downstream end further downstream of the lower conveyor is arranged such as to deposit a strip onto the strip which has just been deposited, and
the upper conveyor which has its downstream end at the lower most upstream end of the lower conveyor is arranged such as to deposit the strip which forms the top strip of the food product.

2. A machine according to claim 1 wherein the strips of flexible food material are strips of pasta.

3. A machine according to claim 1 wherein the number of strips is from three to six.

4. A machine according to claim 1 wherein the number of upper conveyor belts (14,15,16) is the same as the number of strips which it is intended to form in layers over the strip lying on the lower conveyor (17).

5. A machine according to claim 1 wherein, when there are a plurality of upper conveyors (14,15,16), they are positioned parallel to one another and have different lengths, the shortest one (14) for depositing a strip onto the strip lying on the lower conveyor belt, the next shortest (15) for depositing a strip onto the strip which has been deposited from the shortest upper conveyor belt, and the longest upper conveyor belt (16) for depositing the strip which forms the top layer of the food product.

6. A machine according to claim 1 wherein the guiding means to guide the strips of flexible food material onto the upstream ends of the lower and upper conveyor belts (14,15,16,17) respectively are rollers (20,31) around which the strips are trained.

7. A machine according to claim 1 wherein the guiding means to guide a strip of flexible food material from the downstream end of an upper conveyor belt (14,15,16) to lie above another strip advancing downstream is a roller (32,33,34) around which the strip is trained.

8. A machine according to claim 1 wherein filling means (27,28,29) are provided for depositing a filling (30) between the layers of the food product said filling means (27,28,29) being positioned upstream of the guiding means for guiding a strip from the downstream end of an upper conveyor belt to lie above another sheet advancing downstream.

9. A machine according to claim 1 wherein the guiding means to guide a strip of flexible food material from the downstream end of an upper conveyor belt to lie above another strip advancing downstream is a calibrating roller (32,33,34) around which the strip is trained and which can be adjusted to control the thickness of the filling.

10. A process for layering strips of food material comprising
a) forming a plurality of parallel strips of flexible food material,
b) guiding one strip of flexible food material to the upstream end of a lower conveyor belt (17) and at least one other strip of flexible food material to the upstream end of an upper conveyor belt (14,15,16),
the upper conveyor belt (14,15,16) extending from its upstream end lateral to the lower conveyor belt (17) to its downstream end overlying the lower conveyor belt (17),
c) advancing the conveyor belts (14,15,16,17) and the strips downstream, and
d) training strip of flexible food material from the downstream end of an upper conveyor belt (14,15,16) to lie above another strip advancing downstream to form layered sheets of food material characterised in that the strips of flexible food material are added one after the other onto the strip or strips on the lower conveyor belt (17).

## Patentansprüche

1. Maschine zum Schichten von Lebensmittelmaterialien, mit
a) Mitteln zum Bilden mehrerer paralleler Streifen aus einem flexiblen Lebensmittelmaterial,
b) einem unteren Förderband (17) und mindestens einem oberen Förderband (14, 15, 16), das sich von seinem seitlich des unteren Förderbands (17) gelegenen Zufuhrende zu seinem oberhalb des unteren Förderbands (17) angeordneten Abgabeende erstreckt,
c) Führungsmitteln, die einen Streifen des flexiblen Lebensmittelmaterials zum Zufuhrende des unteren Förderbands (17) leiten und mindesten einen weiteren Streifen des flexiblen Lebensmittelmaterials zum Zufuhrende eines oberen Förderbands (14, 15, 16) leiten,
d) Antriebsmitteln zum Antrieb der Förderbänder (14, 15, 16, 17) und zum Bewegen der Streifen in Transportrichtung, sowie
e) Führungsmitteln, die einen Streifen des flexiblen Lebensmittelmaterials vom Abgabeende eines oberen Förderbands (14, 15, 16) auf einen anderen, sich in Transportrichtung bewegenden Streifen leiten und somit ein Lebensmittelprodukt formen, des geschichtete Streifen des Lebensmittelmaterials umfaßt,
dadurch gekennzeichnet,
daß die Streifen ans flexiblem Lebensmittelmaterial durch mehrere obere Förderer, deren Abgebeenden in Abständen in Richtung des unteren Förderers angeordnet sind, nacheinander auf den oder die Streifen auf dem unteren Förderband (17) aufgebracht werden, wobei
der obere Förderer, dessen Abgabeende dem Zufuhrende des unteren Förderbands am nächsten ist, so angeordnet ist, daß er auf den auf dem unteren Förderband liegenden Streifen einen Streifen aufbringt,
der obere Förderer, dessen Abgabeende dem Zufuhrende des unteren Förderbands am zweitnächsten ist, so angeordnet ist, daß er auf den unmittelbar zuvor aufgebrachten Streifen einen Streifen aufbringt, und
der obere Förderer, dessen Abgabeende dem Abgabeende des unteren Förderbands am nächsten ist, so angeordnet ist, daß er den Streifen aufbringt, der den oberen Streifen des Lebensmittelprodukts bildet.

2. Maschine nach Anspruch 1, wobei die Streifen ans flexiblem Lebensmittelmaterial Teigstreifen sind.

3. Maschine nach Anspruch 1, wobei die Anzahl der Streifen drei bis sechs beträgt.

4. Maschine nach Anspruch 1, bei der die Anzahl der oberen Förderbänder (14, 15, 16) so groß ist wie die Anzahl der Streifen, die auf den auf dem unteren Förderer (17) liegenden Streifen aufgeschichtet werden sollen.

5. Maschine nach Anspruch 1, bei der bei Vorhandensein mehrerer oberer Förderbänder (14, 15, 16) diese parallel angeordnet sind und eine unterschiedliche Länge aufweisen, wobei des kürzeste obere Förderband (14) auf den auf dem unteren Förderband liegenden Streifen einen Streifen aufbringt, des zweitkürzeste obere Förderband (15) auf den vom kürzesten Förderband aufgebrachten Streifen einen Streifen aufbringt und des längste obere Förderband (16) den Streifen aufbringt, der den oberen Streifen des Lebensmittelprodukts bildet.

6. Maschine nach Anspruch 1, bei der die Führungsmittel, die die Streifen aus flexiblem Lebensmittelmaterial auf die Zufuhrenden des unteren Förderbands (17) und der oberen Förderbänder (14, 15, 16) leiten, Walzen (20 bzw. 31) umfassen, um die die Streifen herumlaufen.

7. Maschine nach Anspruch 1, bei der die Führungsmittel, die einen Streifen flexiblen Lebensmittelmaterials vom Abgabeende eines oberen Förderbands (14, 15, 16) auf einen anderen, sich in Transportrichtung bewegenden Streifen leiten, Walzen (32, 33, 34) umfassen, um die die Streifen herumlaufen.

8. Maschine nach Anspruch 1, bei der Auftragungsmittel (27, 28, 29,) zur Anbringung einer Füllung (30) zwischen den Schichten des Lebensmittelprodukts vorgesehen sind, die in Transportrichtung oberhalb derjenigen Führungsmittel angeordnet sind, die einen Streifen vom Abgebeende eines oberen Förderbands auf einen anderen, sich in Transportrichtung bewegenden Streifen leiten.

9. Maschine nach Anspruch 1, bei der die Führungsmittel, die einen Streifen des flexiblen Lebensmittelmaterials vom Abgabeende eines oberen Förderbands auf einen anderen, sich in Transportrichtung bewegenden Streifen leiten, Formungswalzen (32, 33, 34) umfassen, um die der Streifen herumläuft, wobei sich diese zur Erlangung einer bestimmten Dicke der Füllung verstellen lassen.

10. Verfahren zum Schichten von Lebensmittelmaterialien, mit den Schritten
a) Bilden mehrerer paralleler Streifen ans einem flexiblen Lebensmittelmaterial,
b) Leiten eines Streifens des flexiblen Lebensmittelmaterials zum Zufuhrende eines unteren Förderbands (17) und mindestens eines weiteren Streifens des flexiblen Lebensmittelmaterials zum Zufuhrende eines oberen Förderbands (14, 15, 16), wobei sich des obere Förderband (14, 15, 16) von seinem seitlich des unteren Förderbands (17) gelegenen Zufuhrende zu seinem oberhalb des unteren Förderbands (17) angeordneten Abgabeende erstreckt,
c) Bewegen der Förderbänder (14, 15, 16, 17) und der Streifen in Transportrichtung sowie
d) Leiten eines Streifens des flexiblen Lebensmittelmaterials vom Abgabeende eines oberen Förderbands (14, 15, 16) auf einen anderen, sich in Transportrichtung bewegenden Streifen, so daß die Streiten des Lebensmittelmaterials geschichtet werden,
dadurch gekennzeichnet,
daß die Streifen ans flexiblem Lebensmittelmaterial nacheinander auf den oder die Streifen auf dem unteren Förderband (17) aufgebracht werden.

## Revendications

1. Machine pour superposer en couches des bandes d'une matière alimentaire, comprenant
a) des moyens pour former plusieurs bandes parallèles de matière alimentaire souple,
b) une courroie transporteuse inférieure (17) et au moins une courroie transporteuse supérieure (14, 15, 16) allant de son extrémité amont latéralement qui est disposée latéralement par rapport à la courroie transporteuse inférieure (17) vers son extrémité aval qui chevauche la courroie transporteuse inférieure (17),
c) des moyens de guidage pour guider une bande de matière alimentaire souple vers l'extrémité amont de la courroie transporteuse inférieure (17) et au moins une autre bande de matière alimentaire souple vers l'extrémité amont d'une courroie transporteuse supérieure (14, 15, 16),
d) des moyens moteurs destinés à faire avancer les courroies transporteuses (14, 15, 16, 17) et les bandes vers l'aval et
e) un moyen de guidage entraînant une bande de matière alimentaire souple à partir de l'extrémité aval d'une courroie transporteuse supérieure (14, 15, 16) pour l'amener à reposer au-dessus d'une autre bande avançant vers l'aval de manière à former un produit alimentaire comprenant des bandes de matière alimentaire superposées en couches,
caractérisée en ce que les bandes de matière alimentaire souple sont ajoutées les unes après les autres sur la bande ou les bandes se trouvant sur la courroie transporteuse inférieure (17) au moyen de plusieurs transporteurs supérieurs dont les extrémités aval sont disposées le long du transporteur inférieur,
le transporteur supérieur, dont l'extrémité aval est à l'extrémité amont la plus en amont de la courroie transporteuse inférieure, est disposé de manière à déposer une bande sur la bande reposant sur la courroie transporteuse inférieure,
le transporteur supérieur, dont l'extrémité aval se trouve davantage vers l'aval du transporteur inférieur, est disposé de manière à déposer une bande sur la bande qui vient d'être déposée et
le transporteur supérieur, dont l'extrémité aval se trouve à l'extrémité amont la moins en amont du transporteur inférieur, est disposé de manière à déposer la bande qui forme la bande supérieure du produit alimentaire.

2. Machine selon la revendication 1, dans laquelle les bandes de matière alimentaire souple sont des bandes de pâte.

3. Machine selon la revendication 1, dans laquelle le nombre des bandes est compris entre trois et six.

4. Machine selon la revendication 1, dans laquelle le nombre des courroies transporteuses supérieures (14, 15, 16) est le même que le nombre des bandes qui sont destinées à être superposées en couches sur la bande reposant sur le transporteur inférieur (17).

5. Machine selon la revendication 1, dans laquelle, lorsqu'il y a plusieurs transporteurs supérieurs (14, 15, 16), ils sont placés parallèlement les uns aux autres et ont des longueurs différentes, le plus court (14) étant destiné à déposer une bande sur la bande reposant sur la courroie transporteuse inférieure, le moins court suivant (15) étant destiné à déposer une bande sur la bande qui a été déposée par la courroie transporteuse supérieure la plus courte et la courroie transporteuse supérieure la plus longue (16) étant destinée à déposer la bande qui forme la couche supérieure du produit alimentaire.

6. Machine selon la revendication 1, dans laquelle les moyens de guidage destinés à guider les bandes de matière alimentaire souple sur l'extrémité amont des courroies transporteuses inférieure et supérieure (14, 15, 16, 17) sont respectivement des rouleaux (20, 31) autour desquels les bandes sont entraînées.

7. Machine selon la revendication 1, dans laquelle le moyen de guidage destiné à guider une bande de matière alimentaire souple à partir de l'extrémité aval d'une courroie transporteuse supérieure (14, 15, 16) pour l'amener à reposer au-dessus d'une autre bande avançant vers l'aval est un rouleau (32, 33, 34) autour duquel la bande est entraînée.

8. Machine selon la revendication 1, dans laquelle des moyens de dépôt d'une garniture (27, 28, 29) sont prévus pour déposer une garniture (30) entre les couches du produit alimentaire, lesdits moyens de dépôt d'une garniture (27, 28, 29) étant placés en amont des moyens de guidage destinés à guider une bande à partir de l'extrémité aval d'une courroie transporteuse supérieure pour l'amener à reposer au-dessus d'une autre feuille avançant vers l'aval.

9. Machine selon la revendication 1, dans laquelle le moyen de guidage destiné à guider une bande de matière alimentaire souple à partir de l'extrémité aval d'une courroie transporteuse supérieure pour l'amener à reposer au-dessus d'une autre bande avançant vers l'aval est un rouleau de calibrage (32, 33, 34) autour duquel la bande est entraînée et dont la position peut être réglée pour commander l'épaisseur de la garniture.

10. Procédé pour superposer en couches des bandes de matière alimentaire, comprenant :
a) la formation de plusieurs bandes parallèles de matière alimentaire souple,
b) le guidage d'une bande de matière alimentaire souple vers l'extrémité amont d'une courroie transporteuse inférieure (17) et au moins d'une autre bande de matière alimentaire souple vers l'extrémité amont d'une courroie transporteuse supérieure (14, 15, 16),
la courroie transporteuse supérieure (14, 15, 16) allant de son extrémité amont, qui est disposée latéralement par rapport à la courroie transporteuse inférieure (17), vers son extrémité aval qui chevauche la courroie transporteuse inférieure (17),
c) le déplacement des courroies transporteuses (14, 15, 16, 17) et des bandes vers l'aval et
d) l'entraînement des bandes de matière alimentaire souple à partir de l'extrémité aval d'une courroie transporteuse supérieure (14, 15, 16) de manière à les amener à reposer au-dessus d'une autre bande avançant vers l'aval de manière à former des feuilles superposées en couches de matière alimentaire, caractérisé en ce que les bandes de matière alimentaire souple sont ajoutées les unes à la suite des autres sur la bande ou les bandes se trouvant sur la courroie transporteuse inférieure (17).
